(19) **Europäisches Patentamt**

**European Patent Office**

**Office européen des brevets**

(11) Veröffentlichungsnummer: **0 334 009**
**A1**

(12) **EUROPÄISCHE PATENTANMELDUNG**

(21) Anmeldenummer: **89102175.0**

(22) Anmeldetag: **08.02.89**

(51) Int. Cl.⁴: **B23K 7/10**

(30) Priorität: **22.03.88 DE 3809636**

(43) Veröffentlichungstag der Anmeldung:
**27.09.89 Patentblatt 89/39**

(84) Benannte Vertragsstaaten:
**AT BE CH DE ES FR GB GR IT LI LU NL SE**

(71) Anmelder: **NORABEL AB**
**Fack 803**
**S-713 00 Nora(SE)**

(72) Erfinder: **Brandin, Roland**
**Fagelvägen 7**
**S-713 00 Nora(SE)**

(74) Vertreter: **Popp, Eugen, Dr. et al**
**MEISSNER, BOLTE & PARTNER**
**Widenmayerstrasse 48 Postfach 86 06 24**
**D-8000 München 86(DE)**

(54) **Zündvorrichtung für eine thermische Lanze.**

(57) Zündvorrichtung für eine thermische Lanze mit Zündsatz (12) und Zünder (13), welche am freien Ende (28) der Lanze fixierbar sind. Der Zünder (13) ist als Friktionszünder ausgebildet und unter dem Druck von in die Lanze eingeleitetem Sauerstoff betätigbar derart, daß die Zündung des Zündsatzes (12) ausgelöst wird.

FIG.1

EP 0 334 009 A1

## Zündvorrichtung für eine thermische Lanze

Die Erfindung betrifft eine Zündvorrichtung für eine thermische Lanze mit Zündsatz und Zünder, welche am freien Ende der Lanze fixierbar ist.

Eine derartige Zündvorrichtung ist für eine Unterwasser-Lanze zum Schneiden von Stahl und Beton aus der DE-B-31 41 583 bekannt. Zündvorrichtungen der genannten Art für thermische Lanzen zum Überwasser-Betrieb sind z. B. in der US-A-35 07 230 beschrieben.

Die genannten Zündvorrichtungen weisen jeweils einen elektrischen Zünder auf mit der Folge, daß eine entsprechende Stromquelle vorhanden sein muß und daß zusätzliche Vorkehrungen für die Auslösung des elektrischen Zünders getroffen werden müssen. Die Verwendung eines elektrischen Zünders ist vor allem beim Unterwasserbetrieb äußerst problematisch.

Ergänzend zu dem obigen Stand der Technik sei noch darauf hingewiesen, daß es auch bekannt ist, mit Hilfe eines Lichtbogens zwischen Lanze und Arbeitsobjekt zu arbeiten. Diese Technik verlangt jedoch eine starke Stromquelle. Es besteht ein erhöhtes Risiko für Kriechströme mit der Folge, daß bei Unterwasser-Betrieb galvanische Elemente entstehen mit den allseits bekannten Nachteilen.

Schließlich ist es noch bekannt, thermische Lanzen manuell zu zünden. Diese Lanzen sind für einen Unterwasser-Betrieb vollkommen ungeeignet. Darüberhinaus erfordert die Zündung eine gewisse Geschicklichkeit des Benutzers.

Der vorliegenden Erfindung liegt nun die Aufgabe zugrunde, eine Zündvorrichtung der eingangs genannten Art dahingehend zu verbessern, daß auf eine elektrische Zündquelle verzichtet werden kann. Vorzugsweise soll die Zündvorrichtung sowohl für Über- als auch Unterwasser-Betrieb gleichermaßen geeignet sein. Zusätzliche Manipulationen am Lanzenende sollen ebenfalls vermieden werden, wobei zu bedenken ist, daß Lanzen der hier fraglichen Art bis zu 20 m und länger sein können.

Diese Aufgabe wird erfindungsgemäß durch die kennzeichnenden Merkmale des Patentanspruches 1 gelöst, wobei bevorzugte konstruktive Details in den Unteransprüchen beschrieben sind.

Erfindungsgemäß ist der Zünder als Friktionszünder ausgebildet und so am freien Lanzenende angebracht, daß er unter dem Druck von in die Lanze eingeleitetem Sauerstoff betätigbar ist, wodurch die Zündung des dem Zünder zugeordneten Zündsatzes erfolgt. Eine elektrische Zündquelle ist also nicht mehr erforderlich. Die Zündung erfolgt ausschließlich durch die Betätigung der Sauerstoffzufuhr. Dementsprechend ist auch die Handhabung einer mit der erfindungsgemäßen Zündvorrichtung versehenen Lanze denkbar einfach. Die erfindungsgemäße Zündvorrichtung ist für sämtliche herkömmlichen thermischen Lanzen verwendbar. Bei Ausbildung der Zündvorrichtung insbesondere nach den Ansprüchen 4 ff ist sie gleichermaßen für Überwasser-als auch Unterwasser-Betrieb geeignet, wobei die Maßnahmen nach den Ansprüchen 5 - 7 eine besonders einfache und funktionssichere Herstellung der Zündpatrone erlauben.

Der Zündsatz besteht vorzugsweise aus einem leicht entzündbarem Werkstoff, wie z. B. Eisenthermit, dessen Reaktion wie folgt abläuft:
$$Fe_2O_3 + 2 Al \rightarrow 2 Fe + Al_2O_3 + 2181,5 \text{ kcal}$$
$(2960\ ^\circ C)$.

Im Folgenden wird eine bevorzugte Ausführungsform einer erfindungsgemäß ausgebildeten Zündvorrichtung anhand der beigefügten Zeichnung näher erläutert. Es zeigen:

Fig. 1 eine Ausführungsform einer erfindungsgemäßen Zündvorrichtung im Längsschnitt; und

Fig. 2 einen Teil der Zündvorrichtung gemäß Fig. 1 im Querschnitt längs Linie II-II in Fig. 1.

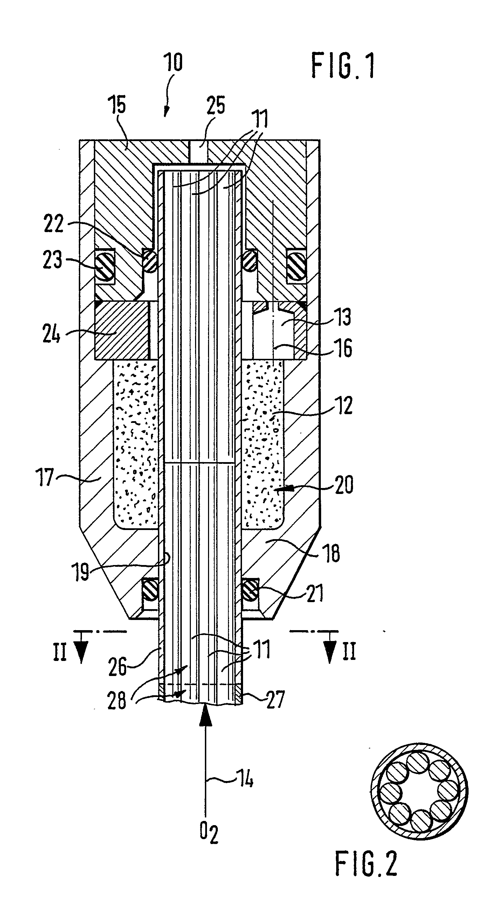

Die in Fig. 1 im schematischen Längsschnitt dargestellte Zündvorrichtung 10 ist zum Aufstecken auf das freie Ende 28 einer thermischen Lanze bestimmt. Sie umfaßt einen Zündsatz 12, z. B. aus Eisenthermit oder dergl., und einen diesem zugeordneten Zünder 13. Der Zünder 13 ist als Friktionszünder ausgebildet und unter dem Druck von in die Lanze bzw. in das Lanzenende 28 eingeleitetem Sauerstoff (Pfeil 14) betätigbar unter gleichzeitiger Zündung des Zündsatzes 12. Zündsatz 12 und Zünder 13 sind bei dem konkreten Ausführungsbeispiel Teil einer auf das freie Lanzenende 28 aufsteckbaren Zündpatrone, die zugleich als Aufnahme für einen kappenartigen, unter dem Druck des in die Lanze eingeleiteten Sauerstoffs abschiebbaren und durch die dabei ausgelöste Zündung von Zünder 13 und Zündsatz 12 absprengbaren Lanzenverschluß 15 dient. Der Zünder 13 weist eine friktionsempfindliche Zündmasse auf, in die ein mit dem Lanzenverschluß 15 verbundenes Friktionselement, z. B. in Form einer Drahtspirale oder dergl., eingebettet ist. In der anliegenden Zeichnung ist lediglich die Längsachse des Friktionselements dargestellt und mit der Bezugsziffer 16 gekennzeichnet. Die erwähnte Zündpatrone wird außenseitig durch einen Metall- oder dergl. -Becher 17 begrenzt, dessen Boden 18 eine Öffnung 19 für den Durchtritt einer die Zündpatrone innenseitig begrenzenden und innerhalb des Bechers 17 einen Ringraum 20 definierenden Hülse 26, wobei der Ringraum 20 zur Aufnahme des Zündsatzes 12, Friktionszünders 13 und Lanzenverschlusses bzw. der Verschlußkappe 15 dient. Mittels der den Ringraum 20 innenseitig begrenzenden Hülse 26 wird die Zündpatrone auf das freie Lanzenende 28 aufgesteckt. Zu diesem Zweck ist die Hülse 26 durch den Becherboden 18 hindurch nach außen geführt. Dadurch wird das Aufsetzen und -stecken der Zündpatrone auf das freie Lanzenende 28 erleichtert.

Die Hülse 26 wird durch einen entsprechend abgetrennten Teil des Lanzenrohres 27 gebildet, wobei die dabei mit abgetrennten, längs des Innenumfangs des Lanzenrohres 26 (siehe Fig. 2) angeordneten Brennstäbe 11 an dem dem Lanzenverschluß 15 abgewandten und aus der Zündpatrone herausragenden Hülsenende entfernt sind. Auf entsprechende Länge sind die Brennstäbe 11 am freien Lanzenende 28 freigelegt, sodaß die Zündpatrone mittels der Hülse 26 unter klemmender Fixierung am freien Lanzenende 28 auf die freigelegten Brennstäbe 11 aufschiebbar ist. Entsprechend Fig. 1 liegen im mantierten Zustand die Hülse 26 sowie die in der Hülse 26 verbliebenen Brennstäbe 11 jeweils stumpf am stirnseitigen Ende des Lanzenrohres 27 sowie der aus diesem vorstehenden Brennstäbe 11 an. Um dies zu erreichen, werden aus der vorher vom Lanzenende abgetrennten Hülse die dabei mit abgetrennten Brennstäbe um eine vorbestimmte Strecke aus der Hülse herausgedrückt. Der aus der Hülse vorstehende Teil der Brennstäbe wird dann abgetrennt. Durch das erwähnte Herausdrücken der Brennstäbe aus der abgetrennten Hülse entsteht in dieser ein brennstabfreier Abschnitt, mit dem später die Hülse als Teil der Zündpatrone auf die freigelegten Brennstäbe am Lanzenende aufsteckbar ist. Die Brennstäbe werden am freien Lanzenende auf einer Länge freigelegt, die der Länge des brennstabfreien Hülsenabschnitts bzw. des aus der Hülse herausgedrückten Teils der Brennstäbe entspricht.

Vorzugsweise ist die Zündpatrone zusätzlich durch eine die Hülse 26 bzw. den aus der Zündpatrone herausragenden Teil derselben und das freie Ende des Lanzenrohres 27 überbrückende Klemm-Muffe am Lanzenende 28 gehalten.

Der durch den Becher 17 einerseits und die innere Hülse 26 sowie die Verschlußkappe 15 andererseits begrenzte Ringraum 20 ist gegenüber der Umgebung abgedichtet, und zwar im Bereich des Becherbodens 18 durch einen O-Ring 21 und im Bereich der Verschlußkappe 15 durch einen zwischen dieser und der Hülse 26 angeordneten Dichtring 22 einerseits und einem zwischen der Verschlußkappe 15 und der Wandung des Bechers 17 angeordneten Dichtring 23 andererseits. Die Dichtringe 22, 23 sind ebenfalls als O-Ringe ausgebildet. Auf diese Weise ist die Zündpatrone auch für den Unterwasser-Betrieb geeignet. Durch die erwähnten Dichtringe 21, 22, 23 kann kein Wasser in den Ringraum 20 eindringen, welcher in Richtung des O₂-Pfeiles 14 gesehen ausgefüllt ist mit dem Zündsatz 20 und einem Distanzring 24, welcher den Friktionszünder 13 samt Zündmasse und Friktionselement 16 aufnimmt. Die Dichtringe 21, 22 und 23 dienen auch zum klemmenden Zusammenhalt der Teile 27, 17 und 15 zueinander bzw. untereinander. Die so ausgebildete Zündpatrone stellt eine in sich geschlossene Baueinheit dar, die auch nachträglich beim Unterwasser-Betrieb auf eine Lanze aufsteckbar ist. Um dann das in die Lanze eingedrungene Wasser durch eingeleiteten Sauerstoff wieder auspressen zu können, weist die Verschlußkappe 15 vorzugsweise eine zentrale Öffnung 25 kleineren Durchmessers auf. Durch diese Öffnung kann bei Verwendung der Lanze unter Wasser in die Lanze eingedrungenes Wasser durch den eingeleiteten Sauerstoff wieder ausgepreßt werden, und zwar bevor die Verschlußkappe 15 unter entsprechender Aktivierung des Zünders 13 und damit des Zündsatzes 12 abgesprengt bzw. regelrecht abgeschossen wird.

Nach Zündung des Zündsatzes 12 brennt dieser ab, wobei eine derart hohe Temperatur entwickelt wird, daß zunächst die relativ dünnwandige Hülse 26 aufschmilzt unter gleichzeitiger Entzündung des durch die Lanze ausströmenden Brenngases, insbesondere Sauerstoffs, sowie der sich innerhalb der Hülse 26 befindenden Brennstäbe bzw. Brennstabteile. In der Folge brennen der Becher 17 und fortschreitend die Lanze in herkömmlicher Weise ab.

Obige Beschreibung läßt deutlich erkennen, daß die Zündung mit Einleitung des Sauerstoffs in die Lanze erfolgt, ohne daß noch zusätzlich ein elektrischer Zünder betätigt werden müßte. Die Lanze kann dementsprechend auch in unmittelbarer Nähe des Arbeitsobjektes gezündet werden, und zwar sowohl über Wasser als auch unter Wasser, vor allem bei Ausführung der Zündvorrichtung entsprechend obiger Beschreibung mit Hülse 26. Es ist auch nicht erforderlich, die Lanze an ihren beiden Enden wasserdicht zu verschließen. Bei Verwendung der Lanze unter Wasser kann das in die Lanze vor Aufsetzen der Zündpatrone eingedrungene Wasser durch die oben beschriebene Zentralöffnung 25 wieder ausgepreßt werden. Dadurch, daß ein elektrischer Zünder entbehrlich ist, sind auch keine Kabelverbindungen sowie elektrische Schalter erforderlich, wodurch die Gesamtkonstruktion erheblich vereinfacht wird.

Die beschriebene Zündvorrichtung ist also gut handhabbar, funktionssicher und einfach in der Konstruktion. Sie ist für thermische Lanzen aller Art geeignet.

Soll die Zündvorrichtung nur für einen Überwasser-Betrieb verwendet werden, könnte auf die Hülse 26 grundsätzlich verzichtet werden. In diesem Falle wäre auch keine Zentralöffnung 25 in der Verschlußkappe 15 erforderlich.

Von wesentlicher Bedeutung ist die Verwendung des Friktionszünders 13, wobei die diesem zugeordnete Zündmasse in unmittelbarem Kontakt zum Zündsatz 12 steht, welcher überwiegend aus leicht entzündlichem Material, wie z. B. Eisenthermit, besteht. Die Hülse 26 ist jedoch auch für eine Überwasser-Zündvorrichtung von Vorteil, da es den Ringraum 20 innenseitig begrenzt, so daß selbst bei rauhem Betrieb kein Zündmaterial durch die Bodenöffnung 19 des Bechers 17 verloren geht. Die Verschlußkappe 15 ist bei der dargestellten Ausführungsform als Becherpfropfen ausgebildet. Sie kann jedoch genausogut als Becherkappe ausgebildet sein, d. h. den Becherrand kappenartig umschließen.

Der Kappenverschluß 15 ist so in den Becher 17 eingepaßt, daß er unter dem Druck des eingeleiteten Sauerstoffs und Überwindung einer vorbestimmten Reibungskraft aus dem Becher herausschiebbar ist unter entsprechender Mitnahme des erwähnten Friktionselements und Betätigung des Zünders 13, durch den dann die Zündung des Zündsatzes 12 ausgelöst wird. Die Kappe 15 wird dann regelrecht abgesprengt bzw. abgeschossen.

Hinsichtlich der übrigen Konstruktion der thermischen Lanze wird auf die eingangs genannten Druckschriften verwiesen. Eine nähere Beschreibung an dieser Stelle erübrigt sich daher.

Sämtliche in den Unterlagen offenbarten Merkmale werden als erfindungswesentlich beansprucht, soweit sie einzeln oder in Kombination gegenüber dem Stand der Technik neu sind.

## Bezugszeichenliste

10 Zündvorrichtung
11 Brennstäbe
12 Zündsatz
13 Zünder
14 Pfeil
15 Lanzenverschluß
16 Friktionselement
17 Becher
18 Becherboden
19 Bodenöffnung
20 Ringraum
21 Ringdichtung
22 Ringdichtung
23 Ringdichtung
24 Distanzring
25 Öffnung
26 Hülse
27 Lanzenrohr
28 Lanzenende

## Ansprüche

1. Zündvorrichtung für eine thermische Lanze mit Zündsatz (12) und Zünder (13), welche am freien Ende (28) der Lanze fixierbar sind, **dadurch gekennzeichnet,** daß der Zünder (13) als Friktionszünder ausgebildet und unter dem Druck von in die Lanze eingeleitetem Sauerstoff betätigbar ist derart, daß die Zündung des Zündsatzes (12) ausgelöst wird.

2. Zündvorrichtung nach Anspruch 1, **dadurch gekennzeichnet,** daß Zündsatz (12) und Zünder (13) Teil einer auf das freie Lanzenende (28) montierbaren, insbesondere aufsteckbaren Zündpatrone sind, die zugleich als Aufnahme eines kappenartigen, unter dem Druck des in die Lanze eingeleiteten Sauerstoffs und der dann ausge lösten Zündung absprengbaren Lanzenverschlusses (15) dient.

3. Zündvorrichtung nach Anspruch 2, **dadurch gekennzeichnet,** daß der Zünder (13) eine friktionsempfindliche Zündmasse umfaßt, in die ein mit dem Lanzenverschluß (15) verbundenes Friktionselement (16), insbesondere in Form einer Drahtspirale oder dergl., eingebettet ist.

4. Zündvorrichtung nach Anspruch 2 oder 3, **dadurch gekennzeichnet,** daß die Zündpatrone einen Metall- oder dergl. -Becher (17) aufweist, dessen Boden (18) mit einer Öffnung (19) versehen ist, durch die hindurch sich eine Hülse (26) in den Becher (17) hineinerstreckt unter Ausbildung eines (Ring-)Raumes (20) innerhalb des Bechers (17), der zur Aufnahme des Zündsatzes (12), Friktionszünders (13) und kappenartigen Lanzenverschlusses (15) dient.

5. Zündvorrichtung nach Anspruch 4, **dadurch gekennzeichnet,** daß die in den Metall- oder dergl. -Becher (17) der Zündpatrone eingesetzte Hülse (26) ein abgetrennter Teil des Lanzenrohres (27) ist, wobei die dabei mitabgetrennten, längs des Innenumfangs des Lanzenrohres (27) angeordneten Brennstäbe (11) an dem dem Lanzenverschluß (15) abgewandten und gegebenenfalls aus der Zündpatrone herausragenden Hülsenende entfernt sind, so daß die Zündpatrone mittels der so ausgebildeten Hülse (26) auf die am Lanzenende auf entsprechende Länge freigelegten Brennstäbe (11) unter klemmender Fixierung aufschiebbar ist.

6. Zündvorrichtung nach Anspruch 5, **dadurch gekennzeichnet,** daß im montierten Zustand die Hülse (26) der Zündpatrone sowie die in der Hülse (26) verbliebenen Brennstäbe (11) jeweils stumpf am stirnseitigen Ende des Lanzenrohres (27) sowie an den aus diesem vorstehenden Brennstäben (11) anliegen.

7. Zündvorrichtung nach Anspruch 5 oder 6, **dadurch gekennzeichnet,** daß die Zündpatrone durch eine die Hülse (26) und das Lanzenrohrende überbrückende Verbindungs-, insbesondere Klemm-Muffe am Lanzenende gehalten ist.

8. Zündvorrichtung nach einem oder mehreren der Ansprüche 4 - 7, **dadurch gekennzeichnet,** daß die Hülse (26) gegenüber der Umgebung abgedichtet (Ringdichtung 21) durch die Bodenöffnung (18) des die äußere Begrenzung der Zündpatrone bildenden Bechers (17) hindurchgeführt und in dieser fixiert ist.

9. Zündvorrichtung nach Anspruch 8, **dadurch gekennzeichnet,** daß die Hülse (26) auch im Bereich des Lanzenverschlusses (15) gegenüber der Umgebung abgedichtet ist, und zwar durch eine zwischen Hülse (26) und Lanzenverschluß (15) angeordnete (Ring-)Dichtung (22) einerseits und eine zwischen Lanzenverschluß (15) und Becher (17) positionierte (Ring-)Dichtung (23) andererseits.

10. Zündvorrichtung nach einem der Ansprüche 4 bis 6, **dadurch gekennzeichnet,** daß der Lanzenverschluß (15) als Becherpfropfen ausgebildet ist, welcher unter Überwindung einer vorbestimmten Reibungskraft axial aus dem Becher (17) herausschiebbar ist, wodurch eine Mitnahme des dem Zünder (13) zugeordneten Friktionselements (16) erfolgt, die zur Zündung des Zünders (13) und Zündsatzes (12) und dementsprechend vollständigen Absprengung des Lanzenverschlusses (15) führt.

11. Zündvorrichtung nach einem oder mehreren der Ansprüche 2 bis 10, **dadurch gekennzeichnet,** daß der Lanzenverschluß (15) eine zentrale Öffnung (25) kleineren Durchmessers aufweist, durch die bei Verwendung der Lanze unter Wasser in die Lanze eingedrungenes Wasser durch eingeleiteten Sauerstoff wieder auspreßbar ist, und zwar bevor der Lanzenverschluß (15) abgesprengt wird.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 2 531 918</u><br>(KALLENBACH)<br>* Anspruch 8 *<br>-- | 1 | B 23 K 7/10 |
| A | <u>US - A - 2 634 196</u><br>(J. PENNECOT)<br>* Fig. 1 *<br>-- | 1 | |
| A | <u>EP - A1 - 0 007 289</u><br>(BATTELLE)<br>* Ansprüche *<br>---- | 1 | |

RECHERCHIERTE
SACHGEBIETE (Int. Cl.4)

B 23 K 7/00
C 06 C 5/00
C 06 C 7/00
C 06 C 9/00
F 23 J 1/00
E 21 C 21/00

Der vorliegende Recherchenbericht wurde für alle Patentansprüche erstellt.

| Recherchenort | Abschlußdatum der Recherche | Prüfer |
|---|---|---|
| WIEN | 02-06-1989 | BENCZE |